# EUROPÄISCHE PATENTSCHRIFT

(11) **EP 4 098 919 B1**
(45) Veröffentlichungstag und Bekanntmachung des Hinweises auf die Patenterteilung: **10.07.2024**
(21) Anmeldenummer: 22174737.1
(22) Anmeldetag: 23.05.2022
(51) Int. Cl.: F16K 51/02, F16K 3/18, F16K 3/314

(54) **VENTILPLATTE ZUM ABDICHTEN EINER VENTILÖFFNUNG EINES VAKUUMVENTILS**
VALVE PLATE FOR SEALING A VALVE OPENING OF A VACUUM VALVE
PLAQUE DE SOUPAPE PERMETTANT DE RENDRE ÉTANCHE UNE OUVERTURE DE SOUPAPE D'UNE SOUPAPE À VIDE

(30) Priorität: 04.06.2021 DE 102021114421
(43) Veröffentlichungstag der Anmeldung: 07.12.2022
(73) Patentinhaber: VAT Holding AG, 9469 Haag (CH)
(72) Erfinder: Schaltegger, Lukas, 9872 Grabs (CH)
(74) Vertreter: Torggler & Hofmann Patentanwälte - Rankweil

(56) Entgegenhaltungen:
- EP-A1- 3 754 239
- JP-A- 2005 291 221
- JP-A- 2017 015 172
- JP-A- H 112 360
- US-A- 5 123 770
- US-A1- 2004 129 910
- US-B2- 8 511 642

## Beschreibung

Die Erfindung bezieht sich auf eine Ventilplatte zum Abdichten einer Ventilöffnung eines Vakuumventils, welche eine zumindest im Wesentlichen rechteckige Form mit längeren Längsseiten und kürzeren Schmalseiten aufweist, wobei an einer Vorderseite der Ventilplatte ein Dichtring aus einem elastomeren Material zum Abdichten der Ventilplatte gegenüber einem die Ventilöffnung umgebenden Dichtsitz angebracht ist und die Ventilplatte an einer Rückseite mindestens eine Vertiefung mit einer hinterschnitten ausgebildeten Begrenzungswand aufweist, welche eine Schrägfläche ausbildet, die zur Befestigung der Ventilplatte an einem Träger mit einer Schrägfläche des Trägers verspannbar ist.

Eine Ventilplatte dieser Art geht aus der US 8,511,642 B2 hervor. Zwei derartige Ventilplatten sind auf gegenüberliegenden Seiten eines Trägers angebracht, um eine Verschlusseinheit eines Vakuumventils auszubilden. Um die Schrägflächen der Ventilplatten mit Schrägflächen des Trägers zu verspannen, sind Spannstücke vorgesehen. Diese sind an einer Schmalseite des Trägers angeschraubt, wobei ein jeweiliges Spannstück ebenfalls eine Schrägfläche aufweist, welche mit einer weiteren Schrägfläche der jeweiligen Ventilplatte zusammenwirkt. Durch die zusammenwirkenden Schrägflächen der Ventilplatten mit den Schrägflächen des Trägers und den Schrägflächen der Spannstücke werden die Ventilplatten gegen den Träger gezogen und starr mit diesem verbunden. Eine jeweilige Ventilplatte ist im Weiteren über eine Art Schwalbenschwanz-Führung auf den Träger aufschiebbar, wodurch die Ventilplatte bei der Montage gegenüber dem Träger unverlierbar gehalten ist und auch die laterale Positionierung der Ventilplatte (=Position in Bezug auf die Richtung der Längsseiten der Ventilplatte) bewirkt wird. Zwar werden die Ventilplatten zuverlässig gehalten und positioniert, allerdings ist diese Ausbildung, u.a. in Hinblick auf die Mehrzahl von separaten Spannstücken, mit einem größeren Herstellungs- und Montageaufwand verbunden.

Aufgabe der Erfindung ist es, eine vorteilhafte Ventilplatte der eingangs genannten Art bereitzustellen, die einfach und zuverlässig an einem Träger montierbar und von diesem abnehmbar ist. Erfindungsgemäß gelingt dies durch eine Ventilplatte mit den Merkmalen des Anspruchs 1.

Die Erfindung sieht vor, dass an der Rückseite der Ventilplatte mindestens eine über die Rückseite der Ventilplatte vorstehende und rechtwinkelig von der Rückseite der Ventilplatte abstehende Lasche angebracht ist, welche eine Durchgangsbohrung zum Durchführen einer in eine Gewindebohrung des Trägers einschraubbaren Spannschraube zum Verspannen der mindestens einen Schrägfläche der Ventilplatte mit der mindestens einen Schrägfläche des Trägers besitzt. Hierbei ist die Ausbildung derart, dass in einer Seitenansicht der Ventilplatte in eine Blickrichtung parallel zu den Längsseiten der Ventilplatte gesehen, die geradlinige Verlängerung der Längsmittelachse der durch die Lasche verlaufenden Durchgangsbohrung in einem Abstand von der Rückseite der Ventilplatte an der Schrägfläche vorbeiläuft.

Durch diese Ausbildung kommt es, wenn die Ventilplatte mit ihrer mindestens einen Schrägfläche auf die mindestens eine Schrägfläche des Trägers aufgesetzt wird und eine durch die Durchgangsbohrung der mindestens einen Lasche geführte Spannschraube in eine Gewindebohrung des Trägers eingeschraubt und gespannt wird, zu einem Kippmoment, durch welches die Rückseite der Ventilplatte in einem Abschnitt, der bezogen auf die Richtung parallel zu den Schmalseiten der Ventilplatte näher bei der mindestens einen Lasche als bei der Schrägfläche der Ventilplatte liegt, gegen den Träger gedrückt wird. Durch dieses Kippmoment in Verbindung mit den Schrägflächen wird die Ventilplatte somit spielfrei an den Träger angedrückt. Es wird hierbei eine sehr einfache Montage und Demontage ohne eine Vielzahl von verlierbaren Teilen ermöglicht.

Vorzugsweise geht die mindestens eine, eine Schrägfläche aufweisende Vertiefung von einem Rand der Ventilplatte aus, welcher eine der Längsseiten der Ventilplatte ausbildet, wobei die Vertiefung an ihrem diesem Rand der Ventilplatte gegenüberliegenden Rand die die Schrägfläche ausbildende Begrenzungswand aufweist.

Vorteilhafterweise weist die Ventilplatte eine erste und eine zweite Vertiefung auf, welche bezogen auf die Richtung der Längsseiten der Ventilplatte voneinander beabstandet sind.

An der Ventilplatte sind vorzugsweise erste und zweite Laschen angebracht, die bezogen auf die Richtung der Längsseiten der Ventilplatte voneinander beabstandet sind, wobei vorzugsweise die erste Vertiefung und die erste Lasche in einem gleichen ersten Bereich der Längserstreckung der Ventilplatte und die zweite Vertiefung und zweite Lasche in einem gleichen zweiten Bereich der Längserstreckung der Ventilplatte angeordnet sind.

Die Ventilplatte weist vorzugsweise einen von der Vertiefung oder einer der Vertiefungen ausgehenden Schlitz auf, welcher sich parallel zu den Schmalseiten der Ventilplatte erstreckt, und zwar in Richtung zur Längsseite der Ventilplatte, welche der Längsseite der Ventilplatte gegenüberliegt, von welcher die Vertiefung ausgeht. Dieser Schlitz dient zum Zusammenwirken mit einer am Träger angeordneten Zentriernoppe, welcher beim Aufsetzen der Ventilplatte auf den Träger in den Schlitz einfährt. Die Positionierung der Ventilplatte bezogen auf die Richtung ihrer Längserstreckung wird dadurch fixiert.

Eine Verschlusseinheit für ein Vakuumventil gemäß der Erfindung weist einen Träger und mindestens eine am Träger befestigte erfindungsgemäße Ventilplatte auf, wobei die Schrägfläche der mindestens einen Vertiefung der Ventilplatte und die mindestens eine Schrägfläche des Trägers mittels mindestens einer Spannschraube miteinander verspannt sind, die in eine Gewindebohrung des Trägers eingeschraubt ist. Diese Gewindebohrung ist vorzugsweise in eine Schmalseite des Trägers eingebracht, welche rechtwinkelig zu einer Seitenfläche des Trägers steht, an welche die Rückseite der Ventilplatte angedrückt ist.

Die mindestens eine Schrägfläche des Trägers ist vorzugsweise an einer Leiste angeordnet, welche über die Seitenfläche des Trägers vorsteht, an welche die Rückseite der Ventilplatte angedrückt ist.

Eine mögliche Ausführungsform der Erfindung sieht vor, dass auf gegenüberliegenden Seiten des Trägers jeweils eine Ventilplatte angeordnet und an den Träger angedrückt ist.

Ein Vakuumventil der Erfindung weist eine an einer Ventilstange angebrachte Verschlusseinheit mit mindestens einer erfindungsgemäßen Ventilplatte auf.

Weitere Vorteile und Einzelheiten der Erfindung werden im Folgenden anhand der beiliegenden Zeichnung erläutert. In dieser zeigen:
- Fig. 1 und 2: ein Ausführungsbeispiel einer Ventilplatte gemäß der Erfindung in einer Ansicht von vorne und hinten;
- Fig. 3: eine Draufsicht;
- Fig. 4: eine Seitenansicht;
- Fig. 5: einen Querschnitt entlang der Linie AA von Fig. 3;
- Fig. 6: einen Träger zur Halterung von zwei erfindungsgemäßen Ventilplatten in einer Ansicht von vorne (die Ansicht von hinten ist identisch);
- Fig. 7 und 8: eine Ansicht des Trägers von oben und unten;
- Fig. 9: eine Seitenansicht des Trägers;
- Fig. 10: einen Querschnitt entlang der Linie BB von Fig. 6;
- Fig. 11 und 12: eine Verschlusseinheit umfassend den Träger und die an diesem angebrachten Ventilplatten von oben und unten;
- Fig. 13: eine Seitenansicht;
- Fig. 14: einen Schnitt entlang der Linie CC von Fig. 11;
- Fig. 15: einen Schnitt entlang der Linie DD von Fig. 11;

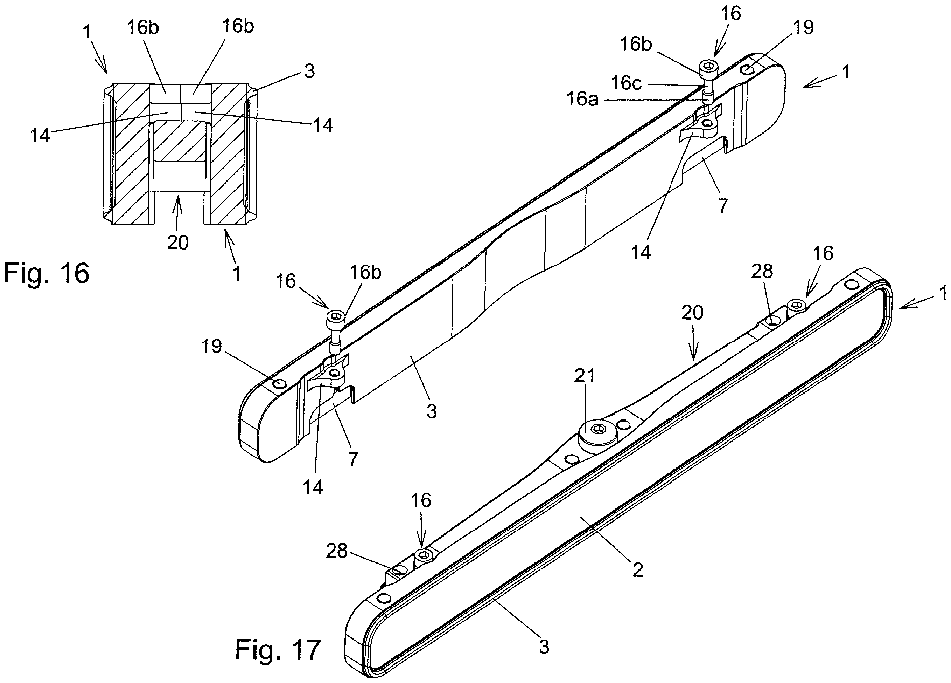

- Fig. 16: einen Schnitt entlang der Linie EE von Fig. 11;
- Fig. 17: eine Schrägsicht, wobei eine der Ventilplatten vom Träger abgenommen ist;

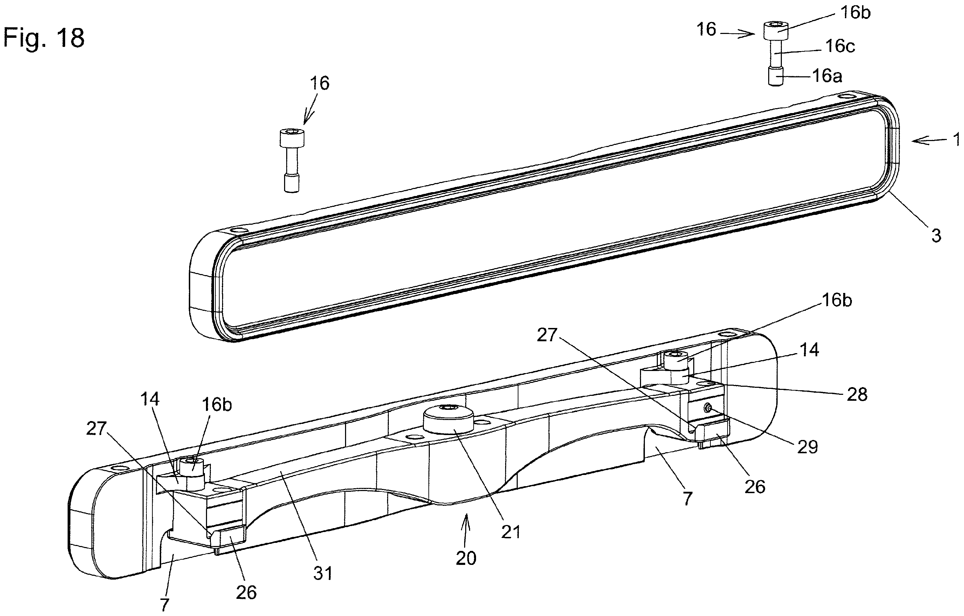

- Fig. 18: eine Schrägsicht analog Fig. 17 aus einer unterschiedlichen Blickrichtung;
- Fig. 19: ein Vakuumventil mit einer erfindungsgemäßen Ventilplatte (vereinfacht);
- Fig. 20: einen Querschnitt durch das Vakuumventil (vereinfacht).

Die Figuren zeigen ein Ausführungsbeispiel einer erfindungsgemäßen Ventilplatte sowie eine Verschlusseinheit mit zwei solchen Ventilplatten sowie ein Vakuumventil mit einer solchen Verschlusseinheit.

Die Ventilplatte 1 weist einen an einer Vorderseite 2 der Ventilplatte angebrachten Dichtring 3 aus einem elastomeren Material auf, der in einer Ebene 13 liegt.

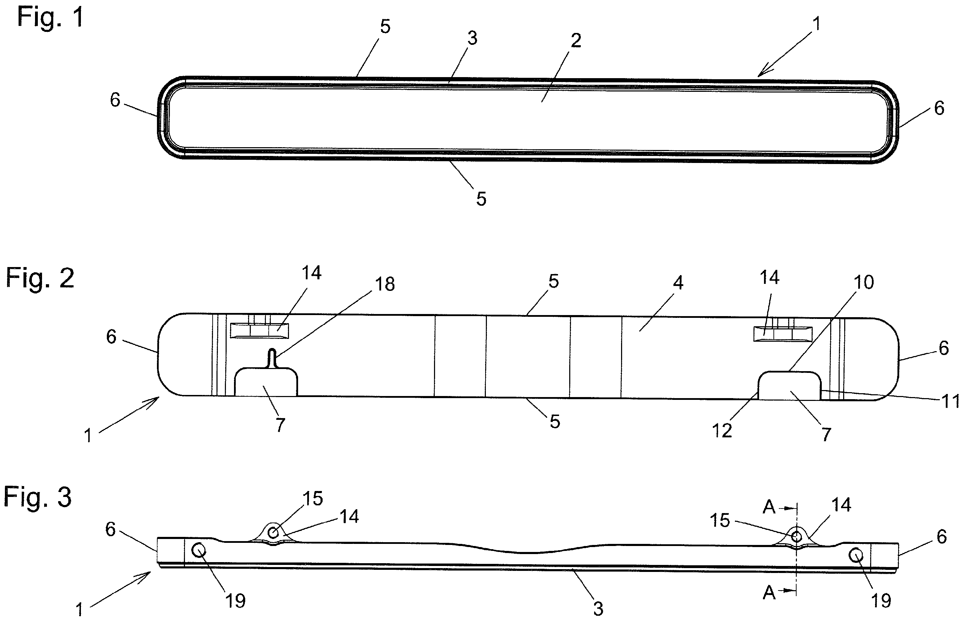

Die Vorderseite 2 und die der Vorderseite gegenüberliegende Rückseite 4 bilden die Großseiten der Ventilplatte 1. In einer Seitenansicht der Ventilplatte auf die Vorderseite (vgl. Fig. 1) weist die Ventilplatte eine zumindest im Wesentlichen rechteckige Form mit längeren Längsseiten 5 und kürzeren Schmalseiten 6 auf. Eine "im Wesentlichen" rechteckige Form umfasst insbesondere eine Ausbildung der Ventilplatte mit einer rechteckigen Form mit abgerundeten Ecken.

Die Längserstreckung der Ventilplatte 1, welche parallel zu den Längsseiten 5 verläuft, ist wesentlich größer als die Erstreckung der Ventilplatte parallel zu den Schmalseiten 6, vorzugsweise mehr als dreimal so groß, besonders bevorzugt mehr als fünfmal so groß.

Die Dicke der Ventilplatte ist vorzugsweise geringer als die Erstreckung parallel zu den Schmalseiten, vorzugsweise weniger als halb so groß.

An der Rückseite 4 der Ventilplatte sind zwei bezogen auf die Längserstreckung der Ventilplatte 1 voneinander beabstandete Vertiefungen 7 ausgebildet. Eine jeweilige der Vertiefungen 7 geht im Ausführungsbeispiel von einem Rand der Ventilplatte 1 aus, welcher eine der Längsseiten 5 der Ventilplatte 1 bildet. Auf der diesem die Längsseite 5 bildenden Rand gegenüberliegenden Seite ist die Vertiefung 7 durch eine hinterschnitten ausgebildete Begrenzungswand begrenzt, d.h. die parallel zu den Schmalseiten 6 der Ventilplatte 1 gemessene Ausdehnung der Vertiefung 7 vergrößert sich zum Boden der Vertiefung hin. Diese Begrenzungswand bildet somit eine Schrägfläche 8.

Der Winkel 9, welche die Schrägfläche 8 mit der Ebene 13 einschließt, in welcher der Dichtring 3 liegt (oder dessen stirnseitige Anlagefläche zur Anlage am Ventilsitz), liegt vorzugsweise im Bereich von 20° bis 45°, beispielsweise bei etwa 30°.

In einer Ansicht auf die Rückseite 4 der Ventilplatte 1 (Fig. 2) verläuft der Rand 10 der Vertiefung, an dem die Schrägfläche 8 auf der vom Boden der Vertiefung entfernten Seite endet, parallel zu den Längsseiten 5 der Ventilplatte 1. Zwischen dem eine der Längsseiten der Ventilplatte ausbildenden Rand der Ventilplatte, von dem die jeweilige Vertiefung 7 ausgeht und dem Rand 10 der Vertiefung 7 ist die Vertiefung von parallel zu den Schmalseiten 6 der Ventilplatte verlaufenden Rändern 11, 12 begrenzt. Die Begrenzungswände der Vertiefung 7, welche diese Ränder 11, 12 bilden, stehen vorzugsweise rechtwinkelig zur Ebene 13, in welcher der Dichtring 3 liegt.

An der Rückseite 4 der Ventilplatte 1 sind zwei von der Rückseite 4 der Ventilplatte 1 abstehende Laschen 14 angebracht. Diese Laschen 14 besitzen jeweils eine Durchgangsbohrung 15 zum Durchführen einer Spannschraube 16, die in eine Gewindebohrung des weiter unten erläuterten Trägers einschraubbar ist. Die Laschen 14 sind in Richtung der Längserstreckung der Ventilplatte 1 voneinander beabstandet. Im Ausführungsbeispiel liegen die erste Vertiefung 7 und die erste Lasche 14 in einem gleichen ersten Bereich der Längserstreckung der Ventilplatte und die zweite Vertiefung 7 und die zweite Lasche 14 liegen in einem gleichen zweiten Bereich der Längserstreckung der Ventilplatte.

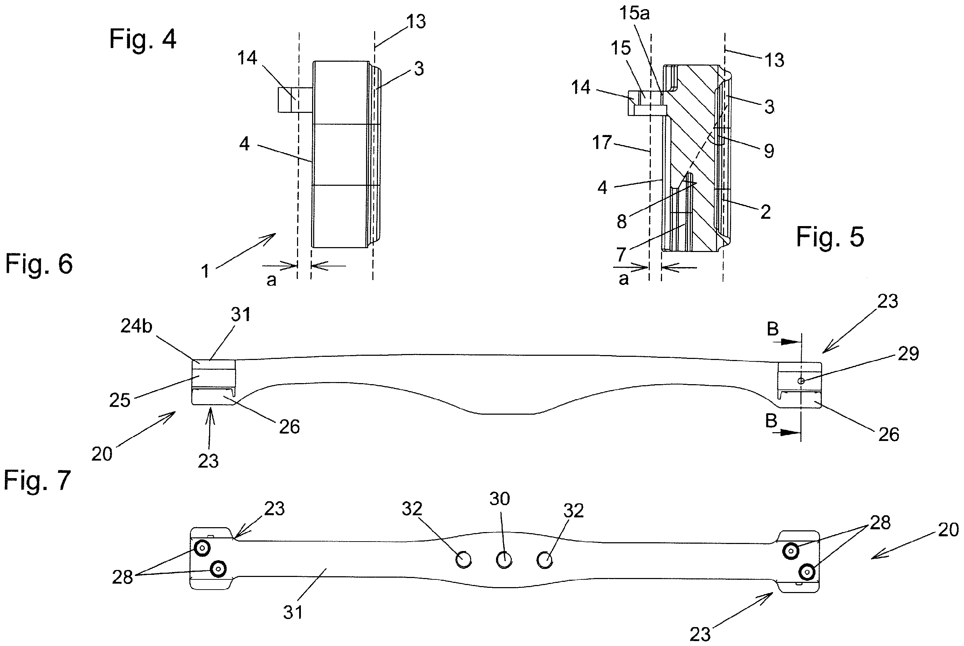

In einer Seitenansicht der Ventilplatte in eine Blickrichtung parallel zu den Längsseiten 5 der Ventilplatte gesehen, eine solche Ansicht zeigt Fig. 4, oder in einem vertikalen Querschnitt durch die Ventilplatte gesehen, einen solchen zeigt Fig. 5, läuft die geradlinige Verlängerung der Längsmittelachse 17 der Durchgangsbohrung 15 dieser Lasche 14 im Abstand a von der Rückseite 4 der Ventilplatte an der Schrägfläche 8 vorbei.

Die Längsmittelachse 17 der Durchgangsbohrung 15 liegt vorzugsweise parallel zur Ebene 13, insbesondere parallel zu den Schmalseiten 6 der Ventilplatte 1.

Vorzugsweise stehen die Laschen 14 in einer Seitenansicht parallel zu den Längsseiten 5 der Ventilplatte gesehen (vgl. Fig. 4) rechtwinkelig von der Rückseite 4 der Ventilplatte ab.

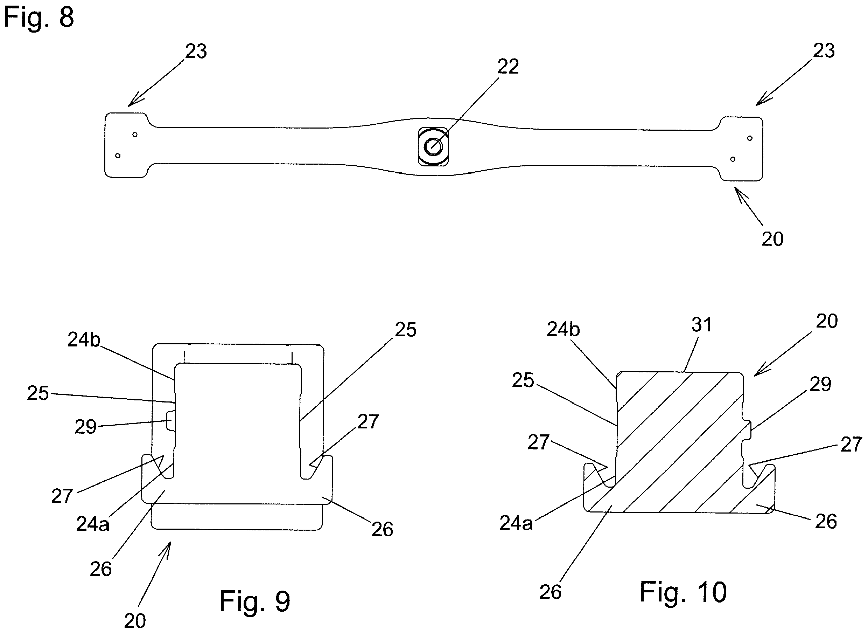

Ein Träger 20, an welchem auf gegenüberliegenden Seiten jeweils eine erfindungsgemäße Ventilplatte 1 festlegbar ist, ist in den Fig. 6 bis 10 dargestellt. Der Träger 20 ist in einem mittleren Bereich über eine Verbindungsschraube mit einer Ventilstange 40 verbindbar, wobei die Ventilstange 40 in eine Ausnehmung 22 des Trägers einsetzbar ist. Die Verbindungsschraube ist durch die Durchgangsbohrung 30 des Trägers in eine Gewindebohrung der Ventilstange 40 einschraubbar.

Von diesem mittleren Bereich erstreckt sich der Träger in entgegengesetzte Richtungen jeweils bis zu einem jeweiligen Kopfabschnitt 23. In den Kopfabschnitten 23 erfolgt die Verbindung mit den Ventilplatten 1. Ein jeweiliger der Kopfabschnitte 23 besitzt gegenüberliegende Seitenflächen zur Anlage einer jeweiligen Ventilplatte 1. Diese Seitenflächen besitzen jeweils parallele und in einer gemeinsamen Ebene liegende Flächenabschnitte 24a, 24b, zwischen welchen ein vertiefter Abschnitt 25 liegt. Die Flächenabschnitte 24a, 24b liegen im montierten Zustand der jeweiligen Ventilplatte parallel zur Ebene 13.

Vom jeweiligen Kopfabschnitt 23 steht auf gegenüberliegenden Seiten jeweils eine vorstehende Leiste 26 ab. Diese besitzt eine Schrägfläche 27 zum Zusammenwirken mit einer jeweiligen Schrägfläche 8 der jeweiligen Ventilplatte 1. Die Flächenabschnitte 24a schließen an die Schrägflächen 27 an. Der Winkel zwischen der Schrägfläche 27 und dem angrenzenden Flächenabschnitt 24a entspricht dem Winkel 9, den die Schrägfläche 8 mit der Ebene 13 einschließt.

Eine Oberseite des Trägers 20 ist mit Gewindebohrungen 28 versehen, die zum Einschrauben der Spannschrauben 16 dienen ("oben" ist auf die Lage des Trägers bezogen, in welcher die Ventilplatten an diesem montiert werden). Diese Oberseite schließt im Ausführungsbeispiel an den Flächenabschnitt 24b an und steht rechtwinkelig zu den Flächenabschnitten 24a, 24b.

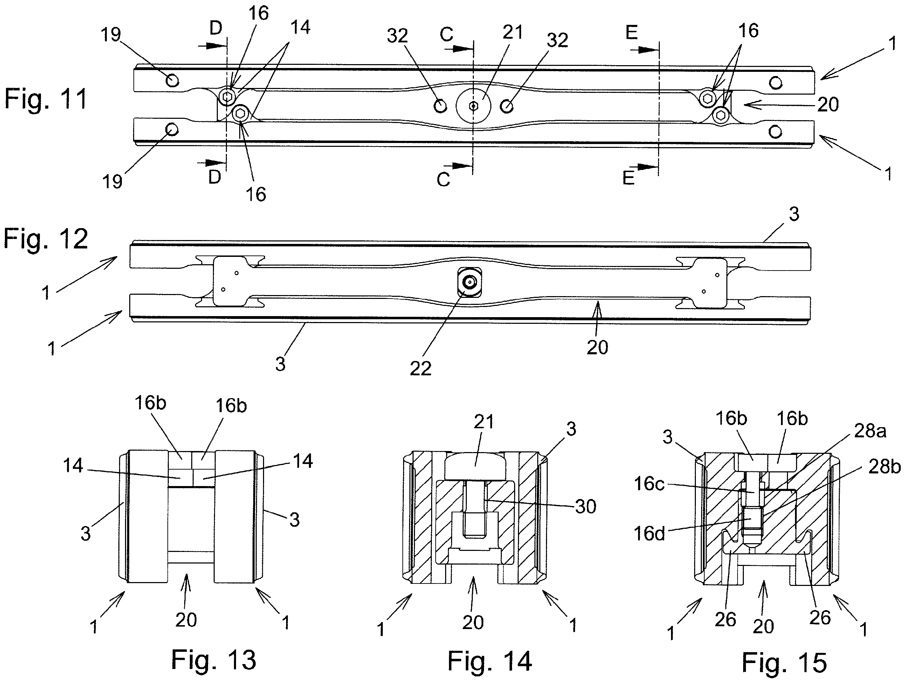

Zum Befestigen einer jeweiligen Ventilplatte 1 am Träger 20 wird die Ventilplatte 1 mit ihren Schrägflächen 8 auf die Schrägflächen 27 der Leisten 26 der Kopfabschnitte 23 des Trägers aufgesetzt und die Spannschrauben 16 werden in die Gewindebohrungen 28 eingeschraubt. Da die Längsmittelachsen 17 der Durchgangsbohrungen 15 im Abstand a von der Ventilplatte 1 an den Schrägflächen 8 der Ventilplatte 1 vorbeilaufen, kommt es durch die Anlage der Köpfe 16b der Spannschrauben 16 an den Laschen 14 zu einem Kippmoment, durch welches die Rückseite 4 der Ventilplatte an den Flächenabschnitt 24b des Trägers 20 angedrückt wird. Gleichzeitig ziehen die zusammenwirkenden Schrägflächen 8, 27 die Rückseite 4 der Ventilplatte an den Flächenabschnitt 24a. Im verbundenen Zustand der Ventilplatte 1 mit dem Träger 20 besteht vorzugsweise eine vollflächige Anlage der Ventilplatte an den Flächenabschnitten 24a, 24b aneinander, vgl. insbesondere die Fig. 15.

Ein im Bereich der Durchgangsbohrung 15 liegender Abschnitt 16c der jeweiligen Spannschraube 16 weist hierbei ein so großes Spiel gegenüber der Durchgangsbohrung 15 auf, dass im verbundenen Zustand zwischen der Ventilplatte und dem Träger dieser Abschnitt der Spannschraube 16 von der Wand der Durchgangsbohrung beabstandet ist.

Die Spannschrauben 16 sind auch im vom Träger 20 abgenommenen Zustand einer jeweiligen Ventilplatte 1 unverlierbar an den Laschen gehalten. Hierzu weisen die Spannschrauben 16 in einem Endabschnitt 16a ein Gewinde auf und im Bereich zwischen dem Endabschnitt 16a und dem Kopf 16b einen Abschnitt 16c ohne Gewinde auf, der einen geringeren Außendurchmesser als das Gewinde im Endabschnitt 16a besitzt. Die Durchgangsbohrungen 15 der Laschen 14 besitzen ein Innengewinde 15a, durch welches der Endabschnitt 16a der Spannschrauben 16 durchgeschraubt wird, worauf der Abschnitt 16c der Spannschraube 16 in den Bereich des Innengewindes 15a zu liegen kommt und die Spannschraube 16a über den Abschnitt 16c gegenüber dem Bereich des Innengewindes 15a verschiebbar ist.

In analoger Weise kann die Verbindungsschraube 21 unverlierbar am Träger gehalten sein, wie dies aus Fig. 14 ersichtlich ist.

Die Gewindebohrungen 28 besitzen anfangs einen Abschnitt 28a ohne Gewinde und erst in einem tieferliegenden Abschnitt 28b ein Innengewinde (vgl. Fig. 15). Der Abschnitt 28a besitzt einen Durchmesser, der größer ist als der Innendurchmesser des Gewindes des Abschnitts 28b, sodass der das Gewinde aufweisende Endabschnitt 16a der Spannschraube 16 durch den Abschnitt 28a bis zu dem das Gewinde aufweisenden Abschnitt 28b der Gewindebohrung 28 einschiebbar ist. Damit können die Spannschrauben 16 bei der Montage mit ihren Endabschnitten 16a in die anfänglichen Abschnitte 28a der Gewindebohrungen eingeführt werden, bevor sie in die Gewinde in den Abschnitten 28b der Gewindebohrungen eingeschraubt werden. Die Ventilplatte 1 ist somit bereits vor dem Einschrauben der Spannschrauben in die Gewinde der Gewindebohrungen 28 provisorisch am Träger 20 gehalten, wodurch die Montage erleichtert wird.

Die Innengewinde 15a können sich, wie aus Fig. 5 und Fig. 15 ersichtlich, nur über einen Teil der Länge der Durchgangsbohrungen 15 erstrecken, sodass an die Innengewinde 15a ein Abschnitt 15b ohne Innengewinde und mit vergrößertem Durchmesser anschließt. Dieser Abschnitt 15b kann zusammen mit dem Abschnitt 28a der Gewindebohrungen 28 den Endabschnitt 16a der jeweiligen Spannschraube 16 vor dem Einschrauben der Spannschraube in den das Gewinde 28b aufweisenden Abschnitt aufnehmen.

Um die Ventilplatte 1 lateral, also bezogen auf die Richtung ihrer Längsseiten 5 auszurichten, ist im Ausführungsbeispiel ein Schlitz 18 vorgesehen, welcher vom Rand 10 einer der Vertiefungen 7 ausgeht und sich in Richtung zur gegenüberliegenden Längsseite 5 der Ventilplatte 1 erstreckt. Mit diesem Schlitz 18 wirkt eine Zentriernoppe 29 des Trägers 20 zusammen, der an einem der Kopfabschnitte 23, im Ausführungsbeispiel im Bereich des vertieften Abschnitts 25 angeordnet ist. Beim Aufsetzen der Ventilplatte 1 auf den Träger 20 fährt die Zentriernoppe 29 in den Schlitz 18 ein und fixiert die laterale Positionierung der Ventilplatte 1.

Die Laschen 14 weisen unterschiedliche Abstände von den Schmalseiten 6 der Ventilplatte auf, vgl. z.B. Fig. 2 und 3. Die Gewindebohrungen 28 sind entsprechend angeordnet. Damit sind die Laschen der gegenüberliegend am Träger angebrachten Ventilplatten 1 jeweils bezogen auf die Längsrichtung der Ventilplatte 1 zueinander versetzt. Damit kann die Breite des Trägers 20 gering gehalten werden.

Die beiden Ventilplatten 1 können hierbei identisch ausgebildet sein, wie dies bevorzugt ist. Die an den gegenüberliegenden Seiten des Trägers 20 festgelegten Ventilplatten sind gegeneinander um eine parallel zu den Schmalseiten 6 der Ventilplatte liegende Mittelachse um 180° gegeneinander verschwenkt.

Im Bereich zwischen den beiden endseitigen Kopfabschnitten 23 ist der Träger 20 im Ausführungsbeispiel von der Rückseite der Ventilplatte 1 beabstandet. Es wird dadurch eine gewisse Torsion (=Verwindung) des Trägers 20 um seine Längsachse ermöglicht. Diese kann also zwischen dem mittleren Bereich der Anbindung an die Ventilstange und dem jeweiligen Kopfabschnitt 23 erfolgen. Dadurch wird eine Anpassung der Lage der Ventilplatte 1 bezüglich dieser Achse gegenüber dem Ventilsitz des Vakuumventils ermöglicht, wodurch eine gleichmäßigere Verpressung des Dichtrings 3 im geschlossenen Zustand des Vakuumventils erreicht werden kann.

Es sind aber auch Ausführungsbeispiele denkbar und möglich, bei welchen auf eine solche Möglichkeit der Torsion des Trägers 20 verzichtet wird. Dabei könnte auch in einem mittleren Bereich der Längserstreckung des Trägers eine solche Leiste mit einer Schrägfläche vorhanden sein und die Ventilplatte eine korrespondierende Vertiefung mit einer Schrägfläche aufweisen. Auch könnte sich beipielsweise eine einzelne Leiste mit einer Schrägfläche über die gesamte Länge des Trägers 20 oder einen Großteil der Länge des Trägers erstrecken und an der Rückseite der Ventilplatte könnte eine einzelne Vertiefung 7 mit einer Schrägfläche 8 vorhanden sein, welche eine entsprechende Erstreckung aufweist.

Um die Verschlusseinheit bei einem Service aus dem Vakuumventil herauszuheben, weist der Träger an der Oberseite 31 Service-Gewindebohrungen 32 auf, in welche Schrauben eines Hebezeugs einschraubbar sind.

Auch die Ventilplatten 1 können an ihren Oberseiten solche Service-Gewindebohrungen 19 aufweisen.

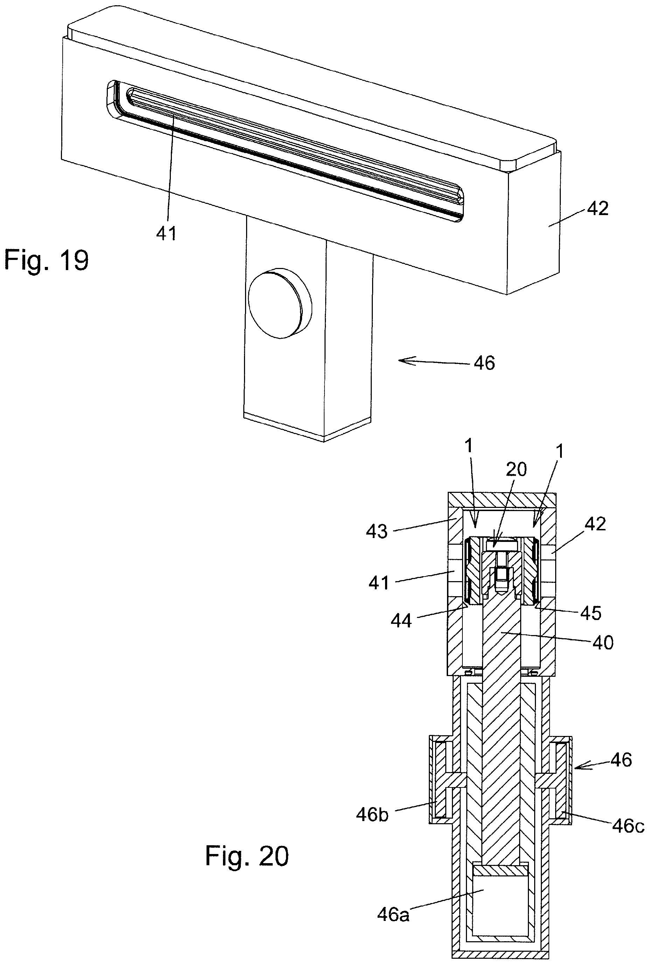

Ein Vakuumventil mit einer derartigen Verschlusseinheit ist in den Fig. 19 und 20 vereinfacht dargestellt. Die Verschlusseinheit ist an einer Ventilstange 40 angebracht, welche mittels eines Ventilantriebs 46 verstellbar ist. Einerseits kann die Ventilstange 40 parallel zu ihrer Längserstreckung verstellt werden, um die Ventilplatten im geöffneten Zustand des Vakuumventils aus dem Bereich eines Durchgangs durch das Vakuumventil zu bringen, welcher sich zwischen ersten und zweiten Ventilöffnungen 41, 42 des Ventilgehäuses 43 erstreckt.

Um das Ventil zu schließen werden die Ventilplatten 1 durch Verstellung der Ventilstange 13 in ihre Längsrichtung in eine zwischen den Ventilöffnungen 41, 42 liegende Lage gebracht, diese ist in Fig. 20 dargestellt. Im Ausführungsbeispiel dient hierzu eine Kolben-Zylindereinheit 46a. Hierbei sind die Dichtringe 3 der Ventilplatten 1 aber noch von den Dichtflächen abgehoben, welche die jeweilige Ventilöffnung 41, 42 auf der Innenseite des Ventilgehäuses 43 umgeben. Diese Dichtflächen bilden Ventilsitze 44, 45 des Vakuumventils.

Im Ausführungsbeispiel kann die Ventilstange 40 vom Ventilantrieb 46, rechtwinkelig zu ihrer Längserstreckung verschoben werden, um ausgehend von dieser Lage der Ventilplatten 1, eine der Ventilplatten 1 an eine dieser Dichtflächen anzupressen, um die entsprechende Ventilöffnung 41, 42 abzudichten. Es sind hierzu Kolben-Zylindereinheiten 46b, 46c dargestellt. Eine entsprechende Führung der Kolben-Zylindereinheit 46a gegenüber dem Ventilgehäuse ist der Einfachheit halber nicht dargestellt. Anstelle einer Verschiebung der Ventilstange in Richtung rechtwinkelig zu ihrer Längserstreckung könnte die Ausbildung auch derart sein, dass die Ventilstange 40 um eine rechtwinkelig zu ihrer Längserstreckung stehende Schwenkachse vom Ventilantrieb 46 verschwenkt wird.

Ein Vakuumventil mit einer erfindungsgemäßen Ventilplatte kann in unterschiedlicher Weise ausgebildet sein. Eine erfindungsgemäße Ventilplatte ist auch bei Vakuumventilen einsetzbar, welche nur eine einzelne an einem Träger befestigte Ventilplatte zum Abdichten einer Ventilöffnung aufweisen.

### Legende zu den Hinweisziffern:

| | | | |
|---|---|---|---|
| 1 | Ventilplatte | 24b | Flächenabschnitt |
| 2 | Vorderseite | 25 | vertiefter Abschnitt |
| 3 | Dichtring | 26 | Leiste |
| 4 | Rückseite | 27 | Schrägfläche |
| 5 | Längsseite | 28 | Gewindebohrung |
| 6 | Schmalseite | 28a | Abschnitt |
| 7 | Vertiefung | 28b | Abschnitt |
| 8 | Schrägfläche | 29 | Zentriernoppe |
| 9 | Winkel | 30 | Durchgangsbohrung |
| 10 | Rand | 31 | Oberseite |
| 11 | Rand | 32 | Service-Gewindebohrung |
| 12 | Rand | 40 | Ventilstange |
| 13 | Ebene | 41 | erste Ventilöffnung |
| 14 | Lasche | 42 | zweite Ventilöffnung |
| 15 | Durchgangsbohrung | 43 | Ventilgehäuse |
| 15a | Innengewinde | 44 | Ventilsitz |
| 15b | Abschnitt | 45 | Ventilsitz |
| 16 | Spannschraube | 46 | Ventilantrieb |
| 16a | Endabschnitt | | |
| 16b | Kopf | | |
| 16c | Abschnitt | | |
| 17 | Längsmittelachse | | |
| 18 | Schlitz | | |
| 19 | Service-Gewindebohrung | | |
| 20 | Träger | | |
| 21 | Verbindungsschraube | | |
| 22 | Ausnehmung | | |
| 23 | Kopfabschnitt | | |
| 24a | Flächenabschnitt | | |

## Patentansprüche

1. Ventilplatte zum Abdichten einer Ventilöffnung (31, 32) eines Vakuumventils, welche eine zumindest im Wesentlichen rechteckige Form mit längeren Längsseiten (5) und kürzeren Schmalseiten (6) aufweist, wobei an einer Vorderseite (2) der Ventilplatte ein Dichtring (3) aus einem elastomeren Material zum Abdichten der Ventilplatte gegenüber einem die Ventilöffnung (31, 32) umgebenden Ventilsitz (44, 45) angebracht ist und die Ventilplatte an einer Rückseite (4) mindestens eine Vertiefung (7) mit einer hinterschnitten ausgebildeten Begrenzungswand aufweist, welche eine Schrägfläche (8) ausbildet, die zur Befestigung der Ventilplatte an einem Träger (20) mit einer Schrägfläche (27) des Trägers (20) verspannbar ist, **dadurch gekennzeichnet, dass** an der Ventilplatte mindestens eine über die Rückseite (4) der Ventilplatte vorstehende und rechtwinkelig von der Rückseite (4) der Ventilplatte abstehende Lasche (14) angebracht ist, welche eine Durchgangsbohrung (15) zum Durchführen einer in eine Gewindebohrung (28) des Trägers (20) einschraubbaren Spannschraube (16) zum Verspannen der mindestens einen Schrägfläche (8) der Ventilplatte mit der mindestens einen Schrägfläche (27) des Trägers (20) besitzt, wobei in einer Seitenansicht der Ventilplatte in eine Blickrichtung parallel zu den Längsseiten (5) der Ventilplatte gesehen die geradlinige Verlängerung der Längsmittelachse (17) der durch die Lasche (14) verlaufenden Durchgangsbohrung (15) in einem Abstand (a) von der Rückseite (4) der Ventilplatte an der Schrägfläche (8) vorbeiläuft.

2. Ventilplatte nach Anspruch 1, **dadurch gekennzeichnet, dass** die mindestens eine Vertiefung (7) von einem eine der Längsseiten (5) der Ventilplatte bildenden Rand der Ventilplatte ausgeht und auf der diesem Rand der Ventilplatte gegenüberliegenden Seite die die Schrägfläche (8) ausbildende Begrenzungswand aufweist.

3. Ventilplatte nach Anspruch 2, **dadurch gekennzeichnet, dass** in einer Ansicht auf die Rückseite der Ventilplatte gesehen die mindestens eine Vertiefung (7) zwischen dem Rand der Ventilplatte, von welchem sie ausgeht, und der die Schrägfläche (8) ausbildenden Begrenzungswand auf gegenüberliegenden Seiten von rechtwinkelig zu den Längsseiten (5) der Ventilplatte verlaufenden Rändern (11, 12) begrenzt ist.

4. Ventilplatte nach einem der Ansprüche 1 bis 3, **dadurch gekennzeichnet, dass** die Längsmittelachse (17) der Durchgangsbohrung (15) durch die Lasche (14) parallel zur Ebene (13) liegt, in welcher der Dichtring (3) der Ventilplatte (1) liegt.

5. Ventilplatte nach einem der Ansprüche 1 bis 4, **dadurch gekennzeichnet, dass** die Ventilplatte eine erste und eine zweite Vertiefung (7) aufweist, die in Richtung der Längserstreckung der Ventilplatte voneinander beabstandet sind.

6. Ventilplatte nach einem der Ansprüche 1 bis 5, **dadurch gekennzeichnet, dass** an der Rückseite (4) der Ventilplatte (1) eine erste und eine zweite Lasche (14) angebracht sind, die in Richtung der Längserstreckung der Ventilplatte (1) voneinander beabstandet sind.

7. Ventilplatte nach Anspruch 5 und 6, **dadurch gekennzeichnet, dass** die erste Vertiefung (7) und erste Lasche (14) in einem gleichen ersten Bereich der Längserstreckung der Ventilplatte und die zweite Vertiefung (7) und zweite Lasche (14) in einem gleichen zweiten Bereich der Längserstreckung der Ventilplatte angeordnet sind.

8. Ventilplatte nach einem der Ansprüche 1 bis 7, **dadurch gekennzeichnet, dass** ein von der Vertiefung (7) ausgehender Schlitz (18) zum Zusammenwirken mit einer am Träger (20) angeordneten, beim Aufsetzen der Ventilplatte auf den Träger (20) in den Schlitz (18) einfahrbaren Zentriernoppe (29) vorhanden ist, wobei sich der Schlitz (18) ausgehend von der Vertiefung (7) parallel zu den Schmalseiten (6) der Ventilplatte verlaufend in Richtung zur gegenüberliegenden Längsseite (5) der Ventilplatte (1) erstreckt.

9. Verschlusseinheit für ein Vakuumventil, wobei die Verschlusseinheit einen Träger (20) und mindestens eine am Träger (20) befestigte Ventilplatte (1) nach einem der Ansprüche 1 bis 8 aufweist, wobei die Schrägfläche (8) der mindestens einen Vertiefung (7) der Ventilplatte (1) und die mindestens eine Schrägfläche (27) des Trägers (20) mittels mindestens einer Spannschraube (16) miteinander verspannt sind, die sich durch die Durchgangsbohrung (15) der Lasche (14) erstreckt und in eine Gewindebohrung (28) des Trägers (20) eingeschraubt ist.

10. Verschlusseinheit nach Anspruch 9, **dadurch gekennzeichnet, dass** die Ventilplatte (1) mit ihrer Rückseite (4) an einer Seitenfläche des Trägers (20) anliegt und die Gewindebohrung (28) in eine rechtwinkelig zur Seitenfläche stehende Oberseite (31) des Trägers (20) eingebracht ist.

11. Verschlusseinheit nach Anspruch 10, **dadurch gekennzeichnet, dass** die mindestens eine Schrägfläche (27) des Trägers (20) an einer Leiste (26) angeordnet ist, die über die Seitenfläche vorsteht, an welcher die Ventilplatte (1) mit ihrer Rückseite (4) anliegt.

12. Verschlusseinheit nach Anspruch 10 oder 11, **dadurch gekennzeichnet, dass** die Seitenfläche des Trägers (20), an welcher die Ventilplatte (1) mit ihrer Rückseite (4) anliegt, einen an die Schrägfläche (27) anschließenden ersten Flächenabschnitt (24a), einen an die die Gewindebohrung (28) aufweisende Schmalseite anschließenden zweiten Flächenabschnitt (24b) aufweist, wobei zwischen dem ersten und zweiten Flächenabschnitt (24a, 24b) ein vertiefter Abschnitt (25) liegt.

13. Verschlusseinheit nach einem der Ansprüche 9 bis 12, **dadurch gekennzeichnet, dass** auf gegenüberliegenden Seiten des Trägers (20) jeweils eine Ventilplatte (1) angebracht ist, welche gleich ausgebildet sind.

14. Vakuumventil mit einer Verschlusseinheit nach einem der Ansprüche 9 bis 13, welche an einer von einem Ventilantrieb (46) verstellbaren Ventilstange (40) angebracht ist.

## Claims

1. A valve plate for sealing off a valve opening (31, 32) of a vacuum valve, which valve plate has an at least substantially rectangular shape with relatively long long sides (5) and relatively short narrow sides (6), wherein a sealing ring (3) made of an elastomeric material is attached to a front side (2) of the valve plate to seal off the valve plate relative to a valve seat (44, 45) surrounding the valve opening (31, 32), and the valve plate on a rear side (4) has at least one indentation (7) with an undercut delimiting wall which forms an inclined face (8) which, to fasten the valve plate to a carrier (20), can be braced with an inclined face (27) of the carrier (20), **characterised in that** at least one lug (14) which projects over the rear side (4) of the valve plate and protrudes at right-angles from the rear side (4) of the valve plate is attached to the valve plate, which lug possesses a through-bore (15) for passing a clamping screw (16) through which can be screwed into a threaded bore (28) in the carrier (20), for bracing the at least one inclined face (8) of the valve plate with the at least one inclined face (27) of the carrier (20), with, seen in a side view of the valve plate in a viewing direction parallel to the long sides (5) of the valve plate, the rectilinear extension of the longitudinal centre line (17) of the through-bore (15) which runs through the lug (14) running past the inclined face (8) at a distance (a) from the rear side (4) of the valve plate.

2. A valve plate according to claim 1, **characterised in that** the at least one indentation (7) starts from an edge of the valve plate which forms one of the long sides (5) of the valve plate, and on the side located opposite this edge of the valve plate has the delimiting wall forming the inclined face (8).

3. A valve plate according to claim 2, **characterised in that**, seen in a view of the rear side of the valve plate, the at least one indentation (7), between the edge of the valve plate from which it starts and the delimiting wall which forms the inclined face (8), being delimited on opposite sides by edges (11, 12) running at right-angles to the long sides (5) of the valve plate.

4. A valve plate according to one of claims 1 to 3, **characterised in that** the longitudinal centre line (17) of the through-bore (15) through the lug (14) lies parallel to the plane (13) in which the sealing ring (3) of the valve plate (1) lies.

5. A valve plate according to one of claims 1 to 4, **characterised in that** the valve plate has a first and a second indentation (7) which are spaced apart from each other in the direction of the longitudinal extent of the valve plate.

6. A valve plate according to one of claims 1 to 5, **characterised in that** to the rear side (4) of the valve plate (1) there are attached a first and a second lug (14) which are spaced apart from each other in the direction of the longitudinal extent of the valve plate (1).

7. A valve plate according to claims 5 and 6, **characterised in that** the first indentation (7) and first lug (14) are arranged in a same first region of the longitudinal extent of the valve plate and the second indentation (7) and second lug (14) are arranged in a same second region of the longitudinal extent of the valve plate.

8. A valve plate according to one of claims 1 to 7, **characterised in that** a slot (18) which starts from the indentation (7) for cooperating with a centring protuberance (29) which is arranged on the carrier (20) and can be retracted into the slot (18) when the valve plate is mounted on the carrier (20) is present, the slot (18) extending, starting from the indentation (7) and running parallel to the narrow sides (6) of the valve plate, in the direction to the opposite long side (5) of the valve plate (1).

9. A closure unit for a vacuum valve, wherein the closure unit has a carrier (20) and at least one valve plate (1) according to one of claims 1 to 8 fastened to the carrier (20), wherein the inclined face (8) of the at least one indentation (7) of the valve plate (1) and the at least one inclined face (27) of the carrier (20) are braced together by means of at least one clamping screw (16) which extends through the through-bore (15) in the lug (14) and is screwed into a threaded bore (28) in the carrier (20).

10. A closure unit according to claim 9, **characterised in that** the valve plate (1) lies with its rear side (4) against a lateral face of the carrier (20), and the threaded bore (28) is formed in an upper side (31) of the carrier (20) which is at right-angles to the lateral face.

11. A closure unit according to claim 10, **characterised in that** the at least one inclined face (27) of the carrier (20) is arranged on a strip (26) which projects across the lateral face against which the valve plate (1) lies with its rear side (4).

12. A closure unit according to claim 10 or 11, **characterised in that** the lateral face of the carrier (20) against which the valve plate (1) lies with its rear side (4) has a first surface portion (24a) adjoining the inclined face (27), a second surface portion (24b) adjoining the narrow side which bears the threaded bore (28), with an indented portion (25) being located between the first and second surface portions (24a, 24b).

13. A closure unit according to one of claims 9 to 12, **characterised in that** one valve plate (1) in each case is attached on opposite sides of the carrier (20), which valve plates are formed the same.

14. A vacuum valve having a closure unit according to one of claims 9 to 13 which is attached to a valve stem (40) which is adjustable by a valve drive (46).

## Revendications

1. Plaque de soupape pour étanchéifier une ouverture de soupape (31, 32) d'une soupape à vide, laquelle plaque présente une forme au moins essentiellement rectangulaire avec des côtés longitudinaux plus longs (5) et des côtés étroits plus courts (6), une bague d'étanchéité (3) réalisée en un matériau élastomère étant fixée sur une face avant (2) de la plaque de soupape pour assurer l'étanchéité de la plaque de soupape par rapport à un siège de soupape (44, 45) entourant l'ouverture de soupape (31, 32), et la plaque de soupape est munie sur une face arrière (4) d'au moins un renfoncement (7) avec une paroi de délimitation en contre-dépouille qui forme une surface inclinée (8) pouvant être serrée contre une surface inclinée (27) d'un support (20) pour la fixation de la plaque de soupape sur le support (20), **caractérisée en ce qu'**au moins une patte (14) qui dépasse de la face arrière (4) de la plaque de soupape et qui saille à angle droit de la face arrière (4) de la plaque de soupape est fixée sur la plaque de soupape, laquelle patte possède un trou traversant (15) pour le passage d'une vis de serrage (16) pouvant être vissée dans un trou fileté (28) du support (20) pour le serrage de ladite au moins une surface oblique (8) de la plaque de soupape contre ladite au moins une surface inclinée (27) du support (20), étant précisé que, en regardant de côté la plaque de soupape dans une direction d'observation parallèle aux côtés longitudinaux (5) de la plaque de soupape, le prolongement rectiligne de l'axe médian longitudinal (17) du trou traversant (15), qui s'étend à travers la patte (14), passe à côté de la surface inclinée (8) à une distance (a) de la face arrière (4) de la plaque de soupape.

2. Plaque de soupape selon la revendication 1, **caractérisée en ce que** ledit au moins un renfoncement (7) part d'un bord de la plaque de soupape formant l'un des côtés longitudinaux (5) de la plaque de soupape, et est munie, sur le côté opposé à ce bord de la plaque de soupape, de la paroi de délimitation formant la surface inclinée (8).

3. Plaque de soupape selon la revendication 2, **caractérisée en ce que,** selon une vue dirigée vers la face arrière de la plaque de soupape, ledit au moins un renfoncement (7) est délimité, entre le bord de la plaque de soupape d'où il part et la paroi de délimitation formant la surface inclinée (8), sur des côtés opposés par des bords (11, 12) s'étendant perpendiculairement aux côtés longitudinaux (5) de la plaque de soupape.

4. Plaque de soupape selon l'une des revendications 1 à 3, **caractérisée en ce que** l'axe longitudinal médian (17) du trou traversant (15) de la patte (14) est parallèle au plan (13) dans lequel se trouve la bague d'étanchéité (3) de la plaque de soupape (1).

5. Plaque de soupape selon l'une des revendications 1 à 4, **caractérisée en ce que** la plaque de soupape est munie d'un premier et d'un deuxième renfoncement (7) espacés l'un de l'autre en direction de l'extension longitudinale de la plaque de soupape.

6. Plaque de soupape selon l'une des revendications 1 à 5, **caractérisée en ce qu'**une première et une deuxième languette (14) sont fixées sur la face arrière (4) de la plaque de soupape (1) et sont espacées l'une de l'autre dans la direction de l'extension longitudinale de la plaque de soupape (1).

7. Plaque de soupape selon les revendications 5 et 6, **caractérisée en ce que** le premier renfoncement (7) et la première patte (14) sont disposés dans une même première zone de l'extension longitudinale de la plaque de soupape, et le deuxième renfoncement (7) et la deuxième patte (14) sont disposés dans une même deuxième zone de l'extension longitudinale de la plaque de soupape.

8. Plaque de soupape selon l'une des revendications 1 à 7, **caractérisée en ce qu'**une fente (18) partant du renfoncement (7) est prévue pour coopérer avec un tenon de centrage (29) disposé sur le support (20) et pouvant être introduit dans la fente (18) lors de la mise en place de la plaque de soupape sur le support (20), la fente (18) s'étendant à partir du renfoncement (7) parallèlement aux côtés étroits (6) de la plaque de soupape en direction du côté longitudinal (5) opposé de la plaque de soupape (1).

9. Unité d'obturation pour une soupape à vide, l'unité d'obturation étant munie d'un support (20) et d'au moins une plaque de soupape (1) selon l'une des revendications 1 à 8 fixée au support (20), la surface inclinée (8) dudit au moins un renfoncement (7) de la plaque de soupape (1) et ladite au moins une surface inclinée (27) du support (20) étant serrées l'une contre l'autre au moyen d'au moins une vis de serrage (16) qui s'étend à travers le trou de passage (15) de la patte (14) et qui est vissée dans un trou fileté (28) du support (20).

10. Unité d'obturation selon la revendication 9, **caractérisée en ce que** la plaque de soupape (1) est appliquée par sa face arrière (4) contre une face latérale du support (20), et le trou fileté (28) est réalisé dans une face supérieure (31) du support (20) perpendiculaire à la face latérale.

11. Unité d'obturation selon la revendication 10, **caractérisée en ce que** ladite au moins une surface inclinée (27) du support (20) est disposée sur une baguette (26) qui dépasse au-dessus de la face latérale contre laquelle la plaque de soupape (1) s'appuie par sa face arrière (4).

12. Unité d'obturation selon la revendication 10 ou 11, **caractérisée en ce que** la face latérale du support (20), contre laquelle la plaque de soupape (1) s'appuie par sa face arrière (4), est munie d'une première section de surface (24a) se raccordant à la surface inclinée (27), d'une deuxième section de surface (24b) se raccordant au côté étroit muni du trou fileté (28), une section en creux (25) étant située entre la première et la deuxième section de surface (24a, 24b).

13. Unité d'obturation selon l'une des revendications 9 à 12, **caractérisée en ce qu'**une plaque de soupape (1) est fixée sur chacun des côtés opposés du support (20), lesquelles sont de même configuration.

14. Soupape à vide avec une unité d'obturation selon l'une des revendications 9 à 13 fixée sur une tige de soupape (40) réglable par un actionneur de soupape (46).
